# EUROPEAN PATENT SPECIFICATION

(11) **EP 3 397 511 B1**
(45) Date of publication and mention of the grant of the patent: **09.10.2019**
(21) Application number: 16823107.4
(22) Date of filing: 14.12.2016
(51) Int. Cl.: B60C 11/03, B60C 11/11, B60C 11/13

(54) **HEAVY TRUCK TIRE TREAD AND HEAVY TRUCK TIRE**
LASTWAGENREIFENLAUFFLÄCHE UND LASTWAGENREIFEN
BANDE DE ROULEMENT DE PNEU DE POIDS LOURD ET PNEU DE POIDS LOURD

(30) Priority: 28.12.2015 US 201562271454 P
(43) Date of publication of application: 07.11.2018
(73) Proprietor: Compagnie Générale des Etablissements Michelin, 63000 Clermont-Ferrand (FR)
(72) Inventor: ABAROTIN, Victor, Greenville SC 29605 (US); HICKS, Daniel, Greenville SC 29605 (US)
(74) Representative: Casalonga
(86) International application number: PCT/US2016/066511
(87) International publication number: WO 2017/116706

(56) References cited:
- EP-A1- 0 552 664
- EP-A2- 1 172 234
- WO-A1-2012/090014
- WO-A1-2014/052236
- US-A1- 2013 192 729
- US-B1- 6 260 594

## Description

### FIELD OF THE INVENTION

This invention relates generally to tire treads and tires. More specifically, this invention relates to tire treads and tires best suitable for the drive axle(s) of heavy trucks such as the drive axle(s) of tractors used in tractor-semi-trailer combinations or in single unit straight trucks. WO 2014/052236 A discloses a tire with inclined ribs separated by grooves and extending continuously from a shoulder region to substantially the centreline of the tread region.

### BACKGROUND OF THE INVENTION

One problem with treads for drive tires is the compromise between traction, rolling resistance and (irregular) wear.

### SUMMARY OF THE INVENTION

The invention provides for a heavy truck tire tread having a longitudinal direction, a lateral direction and a thickness direction, said tread comprising :
- a pair of opposing tread edges spaced apart along the lateral direction;
- a tread region extending between the tread edges over a rolling tread width;
- a shoulder zone adjacent to each tread edge of said pair of opposing tread edges and extending over a lateral length of 10% of the rolling tread width; and
- a center zone defined between said shoulder zones;
wherein the tread region comprises a plurality of ribs separated by grooves, said grooves running continuously from the center zone toward each of said tread edges at a groove angle relative to the lateral direction and extending out to the respective tread edge ; and wherein :
- a shoulder zone average groove angle is greater than 45° in absolute value;
- the shoulder zone average groove angle is greater than a center zone average groove angle in absolute values; and
- the grooves are running toward the tread edges against a rolling direction of the tire.

In another embodiment, the ribs are blunted where the grooves are opening out to a tread edge, a lateral length of said blunting being less than 25 mm.

In another embodiment, said lateral length of said blunting is at least 2 mm.

In another embodiment, said lateral length of said blunting is at least 5 mm.

In another embodiment, said lateral length of said blunting is at least 10 mm.

In another embodiment, said lateral length of said blunting is between 15 and 20 mm.

In another embodiment, said shoulder zone average groove angle is less than 70° in absolute value.

In another embodiment, said shoulder zone average groove angle is greater than 50° in absolute value.

In another embodiment, said center zone average groove angle is less than 50° in absolute value.

In another embodiment, said center zone average groove angle is greater than 10° in absolute value.

In another embodiment, a difference between said center zone average groove angle and said shoulder zone average groove angle in absolute values is comprised between 10° and 60°, preferably between 20° and 50°.

In another embodiment, the center zone comprises at least one circumferential groove.

The invention also provides for a heavy truck tire comprising such a tread.

The foregoing and other objects, features and advantages of the invention will be apparent from the following more detailed descriptions of a particular embodiment of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. **1** is a perspective view of a heavy truck tire comprising an embodiment of the disclosed tire tread.
FIG. **2** is a front view of the heavy truck tire of FIG. **1****.**
FIG. **3** is a front view of part of the tread of FIG. **1** and **2** showing details of its design at a much bigger scale.
FIG **4** is a partial view, even more magnified, limited to the left part of the full-width view of FIG **3****.**
FIGS **5** to **11** are front views of other embodiments of the tread.
FIG. **12** is a perspective view of an embodiment of the heavy truck tire comprising the tread of FIG **9****.**
FIG. **13** is a detail view showing an example of how the grooves could connect with the tread edges.
FIGS **14** to **18** simply illustrate different examples of how the grooves could connect with the tread edges.

The use of the same or similar reference numerals in the figures denotes the same or similar features.

### DETAILED DESCRIPTION OF PARTICULAR EMBODIMENTS

Reference will now be made in detail to embodiments of the invention, examples of which are illustrated in the drawings. These examples are provided by way of explanation of the invention.

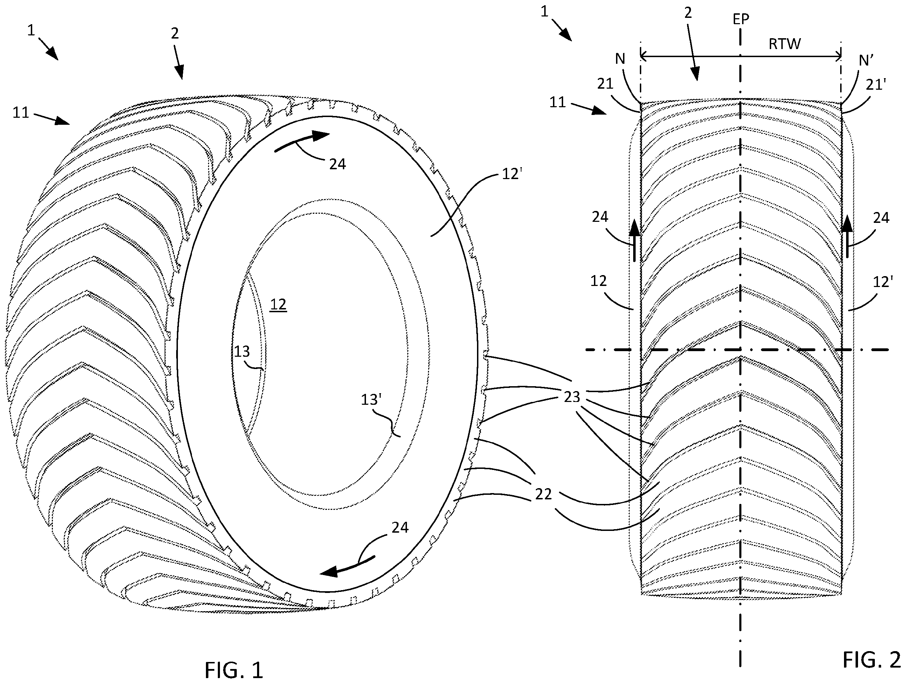

As shown in FIG. **1** and **2****,** a heavy truck tire **1** comprises a tread **2** according to an embodiment of the invention.

As shown in FIG. **1****,** a heavy truck tire **1** generally comprises a crown portion **11** connected by respective sidewalls **12, 12'** to beads portions **13, 13'.**

The tread **2** has a longitudinal direction (also referred to as the circumferential direction of the tire), a lateral direction (also referred to as the axial or transverse direction) and a thickness direction (also referred to as the tread depth direction).

The tread has respective tread edges **21, 21'** on each side. A rolling tread width **RTW** is defined as the distance from a first edge point **N** to an opposite second edge point **N'.** The edge points are defined as the maximum axial locations where the tread of the tire no longer comes in contact with the ground under standard, straight rolling conditions (75% of the TRA load at standard pressure for the tire). These locations do not account for tread that may intermittently come into contact with the ground (such as sacrificial shoulder ribs).

The tread has ribs **22** defined by grooves **23** running parallel to each other. The grooves are continuously extending from the tread center to the tread edges and connecting to the side of the tread. The grooves run at an angle relative to the lateral direction.

The design of the tread is substantially symmetric, that is to say that the tread features are arranged substantially symmetrically about the equatorial plane **EP.** Therefore, equatorial plane **EP** bisects the tread **2** into opposing halves of substantially the same design. This tread is said to be of a directional design because it has a different look according to which side it is oriented. A directional tire or tread does not only look differently but it also performs differently if used in one rolling direction or the other. This is why directional treads or tires conventionally bear markings that indicate the designed rolling direction. Such markings may be arrows **24** pointing into the designed rolling direction. Using the tire for rolling in the opposite direction would be detrimental to its best performance.

The general orientation of the grooves in the tread is such that they are running from the tread center toward the shoulders against the rolling direction of the tire, that is to say running from the tread center toward the shoulders while running opposite of the rolling direction of the tire.

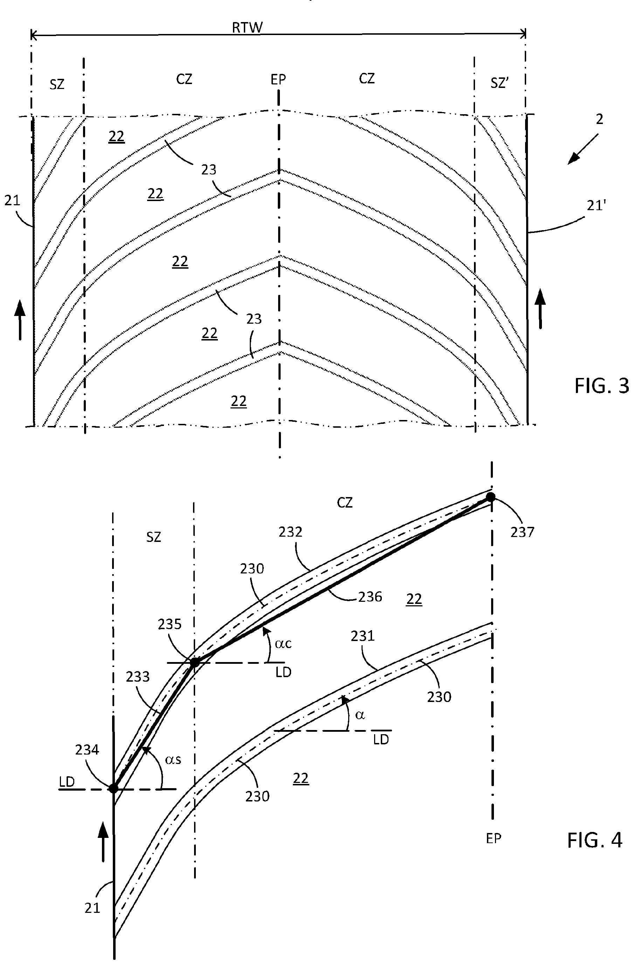

FIG **3** is a magnified and flattened projection view of a portion of the tread **2** of FIGS **1** and **2****.** Tread **2** comprises a shoulder zone **SZ, SZ'** adjacent to each one of said pair of opposing tread edges **21, 21'** and extending over a lateral length amounting to 10% of the rolling tread width **RTW.** A center zone **CZ** is defined between the two shoulder zones.

FIG **4** is a partial view, even more magnified, of the tread of FIG **3** to show even more clearly features like the orientation of the grooves. This partial view is limited to the left part of the full-width view of FIG **3****.** Relative to equatorial plane **EP,** the other half of the tread is substantially symmetric as seen from FIG **3****.** But a tread according to the invention may also comprise tread halves that are notably different as long as each tread half remains within the scope of the invention as limited by the claims.

In a first groove **231,** a groove median line **230** is representing the orientation of the groove across the tread and **α** is the angle that this groove median line **230** makes with the lateral direction **LD** at any point along the groove. Angle **α** may be positive as represented here or be locally negative at some point where the groove is inclined in the opposite direction or if one looks at a similar tread upside-down.

In the next groove **232,** the definition of average angles is explained. A shoulder zone average groove angle **αs** is defined as the angle that a shoulder groove line **233** is making with the lateral direction **LD.** The shoulder groove line **233** is defined between a point **234** where the groove median line **230** extends out at the tread edge **21** and a point **235** where the groove median line **230** crosses the separation line between the shoulder zone **SZ** and the center zone **CZ.** A center zone average groove angle **αc** is defined as the angle that a center groove line **236** is making with the lateral direction **LD.** The center groove line **236** is defined between the point **235** where the groove median line **230** crosses the separation line between the shoulder zone **SZ** and the center zone **CZ** and a point **237** where the groove median line **230** meets the equatorial plane **EP.**

According to the invention, the shoulder zone average groove angle **αs** is greater than 45° in absolute value and the shoulder zone average groove angle **αs** is greater than a center zone average groove angle **αc** in absolute values. Those comparisons are effected in absolute values to make them insensitive to the direction one looks at the tread, be it with the tire rolling direction going up as represented here or upside-down.

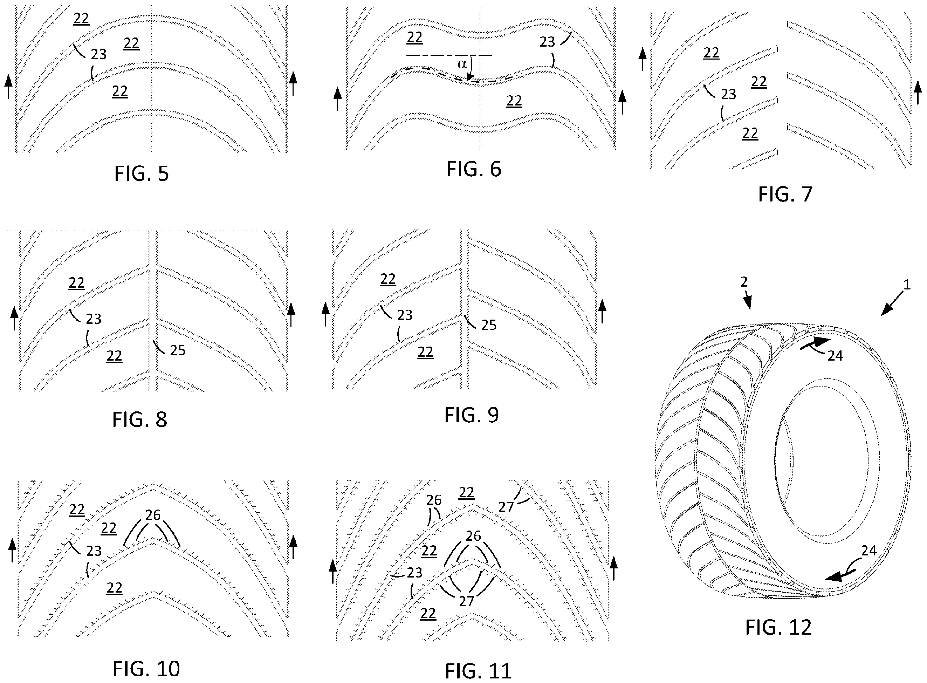

FIG **5** shows another embodiment of a tread where the groove angle **α** is varying continuously from a steep angle at the tread edges to being 0° at the equatorial plane.

FIG **6** shows another embodiment of a tread where the groove angle **α** is starting from a steep angle at the tread edges, then decreasing continuously until becoming negative in a first part of the center zone and increasing again to become 0° at the equatorial plane.

FIG **7** shows another embodiment of a tread where the grooves are oriented in a way very similar to the embodiment of FIG **1** to **4****.** The difference here is that the grooves are interrupted near the equatorial plane and do not even reach the equatorial plane. The grooves of each half tread are offset and do not connect.

FIG **8** shows another embodiment of a tread where the grooves are oriented in a way very similar to the embodiment of FIG **1** to **4****.** The difference here is the presence of a longitudinal groove **25** on the equatorial plane. In another embodiment the longitudinal groove may be located anywhere in the center zone. In yet another embodiment the tread may include more than one longitudinal groove in the center zone.

FIG **9** shows another embodiment of a tread very similar to the embodiment of FIG **8****.** The difference here is that grooves of each half tread are offset and do not connect directly but only via the longitudinal groove **25** on the equatorial plane.

FIG **10** shows another embodiment of a tread where the grooves are oriented in a way very similar to the embodiment of FIG **1** to **4****.** The difference here is the presence of partial sipes **26** on the trailing edge of each rib **22.** The trailing edge of each rib is defined relative to the rolling direction as the edge that is leaving the contact patch as the latest one. Partial sipes **26** are said "partial" because they each have a sipe length shorter than the rib width such that they do not extend fully across the ribs. Each partial sipe is spaced apart along the direction of rib length from an adjacent partial sipe by a spacing. Each partial sipe has a sipe depth. For this exemplary embodiment, spacing distance is less than about 1.5 times the sipe depth. In turn, sipe depth is at least about 50 percent of the height of ribs (also referred as the tread depth). Partial sipes **26** also have a sipe length that is at least about 50 percent of the spacing between partial sipes.

FIG **11** shows another embodiment that is very similar to the embodiment of FIG **10****.** The difference here is the presence of partial sipes **27** on the leading edge of each rib **22.** The leading edge of each rib is defined relative to the rolling direction as the edge that is entering the contact patch as the latest one. Partial sipes **27** are otherwise similar to partial sipes **26.**

FIG **12** shows a tire 1 comprising the tread of FIG **9****.**

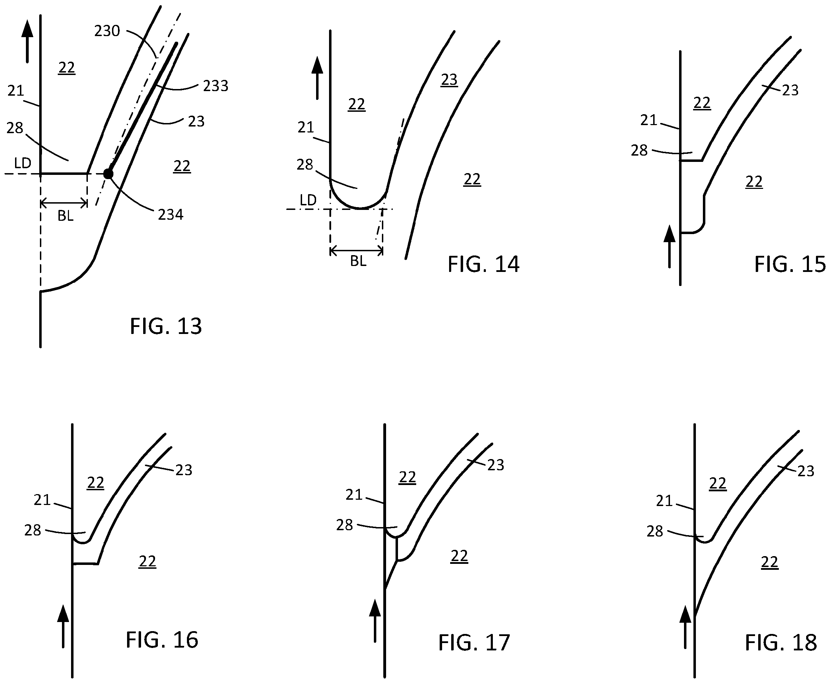

FIG **13** illustrates a blunting that may be applied at the tip of each rib **22** at the tread edges. In order to protect the tapered tip **28** of each rib where the groove **23** meets the tread edge **21,** the tapered tip **28** may be blunted. A blunting length **BL** is defined along the lateral direction **LD** between the tread edge and the outside wall of the groove. The blunting length **BL** is less than 25 mm. Depending on the aggression level typical of the use the tread is designed for, the blunting length **BL** may be less than 15 mm, 10 mm or even less than 5 mm.

When the rib tips are blunted, the starting point **234** for the shoulder groove line is located where the groove median line **230** passes the lateral direction **LD** that is tangent to the blunting.

FIG **14** illustrates another embodiment where the blunting may have a radiused shape.

FIGS **15** to **18** simply illustrate different examples of shapes that the groove opening may include.

On the drawings, the grooves are shown in the generic and conventional shape of fully open grooves but they could be of many other form. They may for instance be partially hidden grooves that is to say grooves that may not be always fully open to the tread surface. Such grooves may for example undulate along their length between a lower position where they are only connected to the surface by a sipe and a higher position where they are fully open at the surface. Partially hidden grooves may also consist in an under-surface duct connected to the surface by a series of radially extending passages.

## Claims

1. A heavy truck tire tread (2) having a longitudinal direction, a lateral direction (LD) and a thickness direction, said tread comprising :
- a pair of opposing tread edges (21, 21') spaced apart along the lateral direction;
- a tread region extending between the tread edges over a rolling tread width (RTW);
- a shoulder zone (SZ) adjacent to each tread edge of said pair of opposing tread edges and extending over a lateral length of 10% of the rolling tread width (RTW); and
- a center zone (CZ) defined between said shoulder zones;
wherein the tread region comprises a plurality of ribs (22) separated by grooves (23), said grooves running continuously from the center zone toward each of said tread edges at a groove angle (α) relative to the lateral direction and extending out to the respective tread edge; and wherein:
- a shoulder zone average groove angle (αs) is greater than 45° in absolute value;
- the shoulder zone average groove angle (αs) is greater than a center zone average groove angle (αc) in absolute values; and
- the grooves (22) are running toward the tread edges against a rolling direction (24) of the tire.

2. A heavy truck tire tread according to Claim 1, wherein the ribs are blunted where the grooves are opening out a tread edge, a lateral length (BL) of said blunting being less than 25 mm.

3. A heavy truck tire tread according to Claim 2, wherein said lateral length of said blunting is at least 2 mm.

4. A heavy truck tire tread according to Claim 2, wherein said lateral length of said blunting is at least 5 mm.

5. A heavy truck tire tread according to Claim 2, wherein said lateral length of said blunting is at least 10 mm.

6. A heavy truck tire tread according to Claim 2, wherein said lateral length of said blunting is between 15 and 20 mm.

7. A heavy truck tire tread according to any preceding Claims, wherein said shoulder zone average groove angle (αs) is less than 70° in absolute value.

8. A heavy truck tire tread according to any preceding Claims, wherein said shoulder zone average groove angle (αs) is less than 50° in absolute value.

9. A heavy truck tire tread according to any preceding Claims, wherein said center zone average groove angle (αc) is less than 50° in absolute value.

10. A heavy truck tire tread according to any preceding Claims, wherein said center zone average groove angle (αc) is less than 10° in absolute value.

11. A heavy truck tire tread according to any preceding Claims, wherein a difference between said center zone groove angle (αc) and said shoulder zone average groove angle (αs) in absolute values is comprised between 10° and 60°, preferably between 20° and 50°.

12. A heavy truck tire tread according to any preceding Claims, wherein the center zone comprises at least one circumferential groove (25).

13. A heavy truck tire (1) comprising a tread (2) according to any of the preceding claims.

## Patentansprüche

1. LKW-Reifenlauffläche (2), die eine Längsrichtung, eine Seitenrichtung (LD) und eine Dickenrichtung hat, wobei die Lauffläche umfasst:
- ein Paar von gegenüberliegenden Laufflächenkanten (21, 21'), die entlang der Seitenrichtung mit Abstand angeordnet sind;
- einen Laufflächenbereich, der sich zwischen den Laufflächenkanten über eine rollende Laufflächenbreite (RTW) erstreckt;
- eine Schulterzone (SZ), die an jede Laufflächenkante des Paares von gegenüberliegenden Laufflächenkanten angrenzt und sich über eine seitliche Länge von 10 % der rollenden Laufflächenbreite (RTW) erstreckt; und
- eine Mittelzone (CZ), die zwischen den Schulterzonen definiert ist;
wobei die Laufflächenregion eine Vielzahl von Rippen (22) umfasst, die durch Rillen (23) getrennt sind, wobei Rillen kontinuierlich von der Mittelzone zu jeder der Laufflächenkanten unter einem Rillenwinkel (α) relativ zur Seitenrichtung verlaufen und sich nach außen zu der jeweiligen Laufflächenkante erstrecken, und wobei:
- ein durchschnittlicher Schulterzonen-Rillenwinkel (αs) größer als 45° im absoluten Wert ist;
- der durchschnittliche Schulterzonen-Rillenwinkel (αs) größer als ein durchschnittlicher Mittelzonen-Rillenwinkel (αc) in absoluten Werten ist; und
- die Rillen (22) laufen zu den Laufflächenkanten gegen eine Rollrichtung (24) des Reifens.

2. LKW-Reifenlauffläche nach Anspruch 1, wobei die Rippen abgestumpft sind, wo sich die Rillen an einer Laufflächenkante öffnen, wobei eine seitliche Länge (BL) der Abstumpfung kleiner als 25 mm ist.

3. LKW-Reifenlauffläche nach Anspruch 2, wobei die seitliche Länge der Abstumpfung mindestens 2 mm beträgt.

4. LKW-Reifenlauffläche nach Anspruch 2, wobei die seitliche Länge der Abstumpfung mindestens 5 mm beträgt.

5. LKW-Reifenlauffläche nach Anspruch 2, wobei die seitliche Länge der Abstumpfung mindestens 10 mm beträgt.

6. LKW-Reifenlauffläche nach Anspruch 2, wobei die seitliche Länge der Abstumpfung zwischen 15 und 20 mm beträgt.

7. LKW-Reifenlauffläche nach einem der vorherigen Ansprüche, wobei der durchschnittliche Schulterzonen-Rillenwinkel (αs) weniger als 70° im absoluten Wert beträgt.

8. LKW-Reifenlauffläche nach einem der vorherigen Ansprüche, wobei der durchschnittliche Schulterzonen-Rillenwinkel (αs) weniger als 50° im absoluten Wert beträgt.

9. LKW-Reifenlauffläche nach einem der vorherigen Ansprüche, wobei der durchschnittliche Mittelzonen-Rillenwinkel (αc) kleiner als 50° im absoluten Wert ist.

10. LKW-Reifenlauffläche nach einem der vorherigen Ansprüche, wobei der durchschnittliche Mittelzonen-Rillenwinkel (αc) kleiner als 10° im absoluten Wert ist.

11. LKW-Reifenlauffläche nach einem der vorherigen Ansprüche, wobei eine Differenz zwischen dem Mittelzonen-Rillenwinkel (αc) und dem durchschnittlichen Schulterzonen-Rillenwinkel (αs) in absoluten Werten zwischen 10° und 60° liegt, vorzugsweise zwischen 20° und 50°.

12. LKW-Reifenlauffläche nach einem der vorherigen Ansprüche, wobei die Mittelzone mindestens eine Umfangsrille (25) umfasst.

13. LKW-Reifen (1), der eine Lauffläche (2) nach einem der vorherigen Ansprüche umfasst.

## Revendications

1. Bande de roulement (2) de pneu de camion lourd ayant une direction longitudinale, une direction latérale (LD) et une direction d'épaisseur, ladite bande de roulement comprenant :
une paire de bords de bande de roulement opposés (21, 21') espacés selon la direction latérale ;
une région de bande de roulement s'étendant entre les bords de bande de roulement sur une largeur de roulement de bande de roulement (RTW) ;
une zone d'épaulement (SZ) adjacente à chaque bord de bande de roulement de ladite paire de bords de bande de roulement opposés et s'étendant sur une longueur latérale de 10% de la largeur de roulement de bande de roulement (RTW) ; et
une zone centrale (CZ) définie entre lesdites zones d'épaulement ;
dans laquelle la région de bande de roulement comprend une pluralité de nervures (22) séparées par des rainures (23), lesdites rainures s'étendant continument depuis la zone centrale vers chacun des bords de bande de roulement à un angle de rainure (α) relativement à la direction latérale et s'étendant hors du bord de bande de roulement respectif ; et dans lequel :
un angle de rainure moyen de zone d'épaulement (αs) est plus grand que 45° en valeur absolue ;
l'angle de rainure moyen de zone d'épaulement (αs) est plus grand qu'un angle de rainure moyen de zone centrale (αc) en valeurs absolues ; et
les rainures (22) s'étendent vers les bords de bande de roulement contre une direction de roulement (24) du pneu.

2. Bande de roulement de pneu de camion lourd selon la revendication 1, dans laquelle les nervures sont émoussées là où les rainures s'ouvrent hors d'un bord de bande de roulement, une longueur latérale (BL) dudit émoussement étant inférieure à 25 mm.

3. Bande de roulement de pneu de camion lourd selon la revendication 2, dans laquelle ladite longueur latérale dudit émoussement est d'au moins 2 mm.

4. Bande de roulement de pneu de camion lourd selon la revendication 2, dans laquelle ladite longueur latérale dudit émoussement est d'au moins 5 mm.

5. Bande de roulement de pneu de camion lourd selon la revendication 2, dans laquelle ladite longueur latérale dudit émoussement est d'au moins 10 mm.

6. Bande de roulement de pneu de camion lourd selon la revendication 2, dans laquelle ladite longueur latérale dudit émoussement est entre 15 et 20 mm.

7. Bande de roulement de pneu de camion lourd selon l'une quelconque des revendications précédentes, dans laquelle ledit angle de rainure moyen de zone d'épaulement (αs) est inférieur à 70° en valeur absolue.

8. Bande de roulement de pneu de camion lourd selon l'une quelconque des revendications précédentes, dans laquelle ledit angle de rainure moyen de zone d'épaulement (αs) est inférieur à 50° en valeur absolue.

9. Bande de roulement de pneu de camion lourd selon l'une quelconque des revendications précédentes, dans laquelle ledit angle de rainure moyen de zone centrale (αc) est inférieur à 50° en valeur absolue.

10. Bande de roulement de pneu de camion lourd selon l'une quelconque des revendications précédentes, dans laquelle ledit angle de rainure moyen de zone centrale (αc) est inférieur à 10° en valeur absolue.

11. Bande de roulement de pneu de camion lourd selon l'une quelconque des revendications précédentes, dans laquelle une différence entre ledit angle de rainure moyen de zone centrale (αc) et ledit angle de rainure moyen de zone d'épaulement (αs) en valeurs absolues est comprise entre 10° et 60°, de préférence entre 20° et 50°.

12. Bande de roulement de pneu de camion lourd selon l'une quelconque des revendications précédentes, dans laquelle la zone centrale comprend au moins une rainure circonférentielle (25).

13. Pneu de camion lourd (1) comprenant une bande de roulement (2) selon l'une quelconque des revendications précédentes.
